# EUROPEAN PATENT APPLICATION

(11) **EP 4 610 827 A1**
(43) Date of publication of application: **03.09.2025**
(21) Application number: 23881846.2
(22) Date of filing: 24.10.2023
(51) Int. Cl.: G06F 9/54

(54) **RDMA EVENT MANAGEMENT METHODS, AND DEVICE AND STORAGE MEDIUM**

(30) Priority: 28.10.2022 CN 202211338130
(71) Applicant: Cloud Intelligence Assets Holding (Singapore) Private Limited, Singapore 189554 (SG)
(72) Inventor: YANG, Hang, Hangzhou, Zhejiang 310030 (CN); LI, Jinhu, Shanghai 200120 (CN); XU, Cheng, Hangzhou, Zhejiang 310030 (CN)
(74) Representative: Dai, Simin
(86) International application number: PCT/CN2023/126279
(87) International publication number: WO 2024/088268

(57) **Abstract**

Provided in the embodiments of the present application are RDMA event management methods, and a device and a storage medium. In the embodiments of the present application, a user mode event management instance for event notification is additionally set between an RDMA application and an RDMA device, and on the basis of the user mode event management instance, during an event notification process for the RDMA application, a CPU hardware resource for performing completion event notification to the RDMA application can wait for the occurrence of a completion event in a low-power-consumption state, such that the power consumption is reduced; and when the completion event occurs, the RDMA device can "wake up" the CPU hardware resource in a user mode; and after the CPU hardware resource is woken up, the RDMA application can be directly notified of the occurrence of the completion event. The whole process does not require the involvement of a kernel mode, such that context switching between the kernel mode and the user mode is not required, thereby shortening the path and period of event notification, reducing a network communication delay of the RDMA application, and improving the application performance of RDMA.

## Description

The present disclosure claims priority to Chinese Patent Application No. 202211338130.7, filed to the China Patent Office on October 28, 2022 and entitled "RDMA EVENT MANAGEMENT METHOD, DEVICE AND STORAGE MEDIUM", the entire contents of which are incorporated herein by reference.

### TECHNICAL FIELD

The present disclosure relates to the technical field of RDMA-based network communication, and in particular, to an RDMA event management method, device, and storage medium.

### BACKGROUND

The remote direct memory access (RDMA) protocol, by virtue of its kernel-bypass feature, allows direct data reading and writing between an application and a network interface card (NIC), and may directly transmit data from a memory of one computer to another computer without intervention of operating systems of the two computers, which circumvents a limitation of a Transmission Control Protocol/Internet Protocol (TCP/IP) protocol, and can effectively reduce a communication delay and a CPU usage rate. It is widely used in fields such as an Internet Data Center (IDC), a High Performance Computing (HPC) application, or an Artificial Intelligence (AI) application.

In order to send and receive data using RDMA, computer network communication standards for RDMA, e.g., InfiniBand (IB), are provided in the art. To develop RDMA applications, a programming interface specification for RDMA applications is provided, e.g., Verbs, which is a set of abstract definitions described by the RDMA/IB specification. On the one hand, the RDMA application may be programmatically implemented based on the interface specification, and on the other hand, a transmission interface for the RDMA application, e.g., Verbs API, may be implemented based on the interface specification. The RDMA application may invoke the RDMA hardware through the transmission interface Verbs API for data sending and receiving, and in the data sending and receiving process, the RDMA application needs to know whether a related completion event (CE) occurs in the RDMA hardware in the data sending and receiving process, so as to carry out timely response and processing.

A common event notification method for an RDMA application is to combine a polling method with an event notification manner: when no completion event occurs, a process used for event notification enters a sleep state to release CPU resources, and when a completion event occurs, the process is woken up, and then the polling method is used, without the need for constantly waking up the process, thereby reducing the wake-up overhead. However, in the current RDMA hardware implementations, an event notification mechanism is implemented by using a hardware interrupt notification and an event queue (EQ), the hardware interrupt is reported to kernel mode of the operating system (OS), and after a series of code processing logic in kernel mode, the RDMA application in user mode is notified, which has the problems of context switching between kernel mode and user mode, long event notification paths, and long periods.

### SUMMARY

A plurality of aspects of the present disclosure provide an RDMA event management method, device, and storage medium, so as to shorten the paths and periods for event notification of RDMA applications, resolve the problem of switching between kernel mode and user mode, reduce the network communication delays of RDMA applications, and improving RDMA application performance.

Examples of the present disclosure provides an RDMA event management method, applied to a user-mode event management instance located between an RDMA application and an RDMA device, including: determining, in response to a waiting request for a completion event initiated by the RDMA application, a user-mode memory region corresponding to the RDMA application, where the user-mode memory region is configured for writing of notification information by the RDMA device when a completion event occurs in at least one CQ queue corresponding to the RDMA application; controlling a first CPU hardware resource to monitor in a low-power state whether a write event of the notification information occurs in the user-mode memory region, where the first CPU hardware resource is a CPU hardware resource allocated to the RDMA application and configured to perform completion event notification to the RDMA application; and in a case where the write event occurs in the user-mode memory region, waking up the first CPU hardware resource, and controlling the first CPU hardware resource to report target CQ identification information corresponding to the notification information to the RDMA application, to notify the RDMA application that a completion event occurs in a target CQ queue corresponding to the target CQ identification information.

Examples of the present disclosure further provides an RDMA event management method, applied to an RDMA device, including: monitoring, in a data transmission process for an RDMA application, whether a completion event occurs in at least one CQ queue corresponding to the RDMA application; writing, in response to detection that a completion event occurs in a target CQ queue, notification information to a user-mode memory region corresponding to the RDMA application, so that a user-mode event management instance wakes up a first CPU hardware resource and controls the first CPU hardware resource to report target CQ identification information corresponding to the notification information to the RDMA application; where the first CPU hardware resource is a CPU hardware resource allocated to the RDMA application and configured to perform completion event notification to the RDMA application, and under a control of the user-mode event management instance, monitors in a low-power state whether a write event of the notification information occurs in the user-mode memory region, until being woken up in response to detection that the write event occurs.

Examples of the present disclosure further provides a computer device, including: a storage, a processor, and an RDMA device, where the storage stores program code corresponding to a user-mode event management instance and program code corresponding to an RDMA application, the user-mode event management instance is located between the RDMA application and the RDMA device, and the processor is coupled to the storage and configured to execute the program code corresponding to the user-mode event management instance, to implement the steps in the RDMA event management method provided in the examples of the present disclosure.

Examples of the present disclosure further provides an RDMA device, including: a monitoring module, configured to monitor, in a data transmission process for an RDMA application, whether a completion event occurs in at least one CQ queue corresponding to the RDMA application; and a writing module, configured to: write, in response to detection that a completion event occurs in a target CQ queue, notification information to a user-mode memory region corresponding to the RDMA application, so that a user-mode event management instance wakes up a first CPU hardware resource and controls the first CPU hardware resource to report target CQ identification information corresponding to the notification information to the RDMA application; where the first CPU hardware resource is a CPU hardware resource allocated to the RDMA application and configured to perform completion event notification to the RDMA application, and under a control of the user-mode event management instance, monitors in a low-power state whether a write event of the notification information occurs in the user-mode memory region, until being woken up in response to detection that the write event occurs.

Examples of the present disclosure further provides a computer-readable storage medium storing a computer program, where the computer program, when executed by a processor, causes the processor to implement the steps in the RDMA event management method provided in the examples of the present disclosure.

### BRIEF DESCRIPTION OF DRAWINGS

In the drawings, unless otherwise specified, the same reference numerals throughout the drawings refer to the same or similar components or elements. These drawings are not necessarily drawn to scale. It should be understood that these drawings depict only some examples disclosed according to the present disclosure and are not to be considered as limiting the scope of the present disclosure.

The accompanying drawings described herein are used to provide a further understanding of the present disclosure and constitute a part of the present disclosure, and the illustrative examples of the present disclosure and the description thereof are used to explain the present disclosure and do not constitute improper limitations to the present disclosure. In the drawings:
FIG. 1 is a flowchart of implementing an event notification by using a hardware interrupt notification and an event queue in current RDMA hardware implementation.
FIG. 2A is a schematic structural diagram of a computer device according to an illustrative example of the present disclosure.
FIG. 2B is a flowchart of event notification according to an illustrative example of the present disclosure.
FIG. 2C is a flowchart of another event notification according to an illustrative example of the present disclosure.
FIG. 3A is a flowchart of an RDMA event management method according to an illustrative example of the present disclosure.
FIG. 3B is a flowchart of another RDMA event management method according to an illustrative example of the present disclosure.
FIG. 4A is a schematic structural diagram of an RDMA event management apparatus according to an illustrative example of the present disclosure.
FIG. 4B is a schematic structural diagram of an RDMA device according to an illustrative example of the present disclosure.

### DETAILED DESCRIPTION

In order to make the objectives, technical solutions, and advantages of the present disclosure clearer, the technical solutions of the present disclosure are clearly and completely described below with reference to specific examples of the present disclosure and corresponding accompanying drawings. Apparently, the described examples are merely some rather than all of the examples of the present disclosure. All other examples obtained by a person of ordinary skill in the art based on the examples of the present disclosure without creative efforts shall fall within the protection scope of the present disclosure.

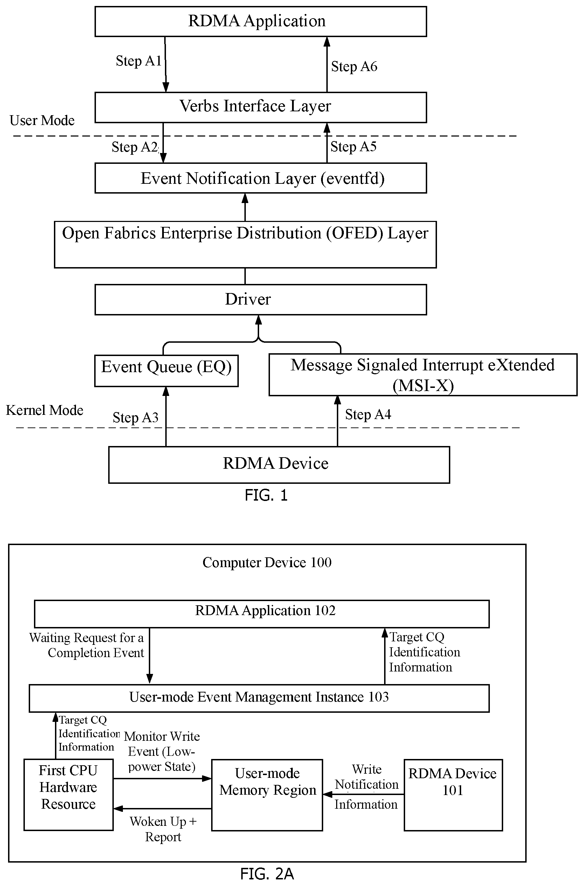

In the standard RDMA Verbs API layer, not only the API required for the RDMA application to invoke the RDMA device for data sending and receiving is provided, but also some APIs used for completion event notification mechanism are provided. Through these APIs for the completion event notification mechanism, the RDMA, in cooperation with the actions of the RDMA hardware, perceives whether a completion event occurs in the data sending and receiving process and fetches the content information of the completion event. In the RDMA hardware implementation, the event notification mechanism is typically implemented by combining Message Signaled Interrupt eXtended (MSI-X) notification of Peripheral Component Interconnect Express (PCIE) and an event queue (EQ). As shown in FIG. 1, the flow of the event notification mechanism includes step A1 to step A6 as described below.

Step A1: The RDMA application waits for generation of a completion event in an event completion queue (Completion Queue, CQ) by invoking an event fetch interface (e.g., ibv_get_cq_event interface) in the Verbs API layer.

Step A2: In the Verbs interface layer, a process for notifying the RDMA application of completion events is controlled to enter a sleep state and wait, in the event notification (e.g., eventfd) layer in kernel mode, for notification information that a completion event occurs, and the notification information indicates which CQ has a completion event occurrence. The eventfd layer is used to carry notification information of completion event occurrence. The eventfd layer is an event waiting/notification mechanism supported by kernel mode, and the eventfd is a file descriptor used to notify events.

Step A3: When a completion event occurs in a CQ, the RDMA device (e.g., an RDMA network interface card) writes the information "In which CQ does a completion event occur" to the EQ. The EQ is a memory space, which is created by a driver of the RDMA device and belongs to kernel mode, and is used by the RDMA device to write the information "In which CQ does a completion event occur" when a completion event occurs.

Step A4: When the RDMA device writes the information to the EQ, the RDMA device may be triggered to write MSI-X to generate a hardware interrupt, and the hardware interrupt is reported to kernel mode.

Step A5: In kernel mode, the information in the EQ written by the RDMA device sequentially passes through a driver of the RDMA device and an Open Fabrics Enterprise Distribution (OFED) layer to the eventfd layer. In the driver layer, an EQ event in the EQ is converted into a CQ event, i.e., the CQ event indicates which CQ has a completion event occurrence, the CQ event is sent to the OFED layer, and the OFED layer transparently transmits the CQ event to the eventfd layer.

The OFED is an open-source software package set, which includes a kernel framework and driver, a user framework and driver, various middleware, test tools, API documents, etc., which is framework code of the RDMA in kernel mode, and may shield an implementation difference of underlying hardware (e.g., a driver layer) for the eventfd layer, thereby providing a more unified and more abstract kernel-mode interface for the RDMA application.

Step A6: the process in the sleep state in foregoing step A2 is woken up, and the CQ event carried by the eventfd layer is returned to the RDMA application through the event fetch interface, so that the RDMA application knows which CQ has a completion event occurrence.

The implementation process of the foregoing event notification mechanism has certain disadvantages: 1) the user-mode process wants to wait for the occurrence of a completion event by "sleeping", and needs to trap into kernel mode to wait for the occurrence of the completion event. At the same time, the RDMA hardware notifies the event to the user-mode process through MSI-X of PCIE-> kernel mode-> user mode, the path of which is long, which also involves context switching between kernel mode and user mode; 2) a series of code logic in kernel mode, e.g., the code logic of OFED and the eventfd layer, are required to be passed through in order to notify the RDMA application in the user mode by the kernel mode, which usually causes delays.

In order to resolve the foregoing technical problem, in the examples of the present disclosure, a user-mode event management instance for event notification is added between an RDMA application and an RDMA device. Based on the user-mode event management instance, in an event notification process for the RDMA application, a CPU hardware resource used to perform event notification for the RDMA application may be enabled to wait for a completion event to occur in a low-power state, to save power consumption; when the completion event occurs, the RDMA device may be enabled to "wake up" the CPU hardware resource in user mode; and after the CPU hardware resource is woken up, the RDMA application may be directly notified that a completion event occurs. The entire process does not need to pass through kernel mode, and there is no need to switch context between kernel mode and user mode, thereby reducing code processing logic of kernel mode, shortening the paths and periods for completion event notification from RDMA devices to RDMA applications, reducing the network communication delays of RDMA applications, and improving RDMA application performance.

The technical solutions provided in various examples of the present disclosure are described in detail below in conjunction with the accompanying drawings.

FIG. 2A is a schematic structural diagram of a computer device according to an illustrative example of the present disclosure. As shown in FIG. 2A, in a hardware implementation structure, the computer device 100 at least includes an RDMA device 101, a storage, and a processor. In an example, the computer device may further include other components such as a communication component, a display, a power supply component, and an audio component. The display component and the audio component are optional components, and may be specifically determined according to a specific implementation form of the computer device 100. For example, if the computer device is implemented as a terminal device such as a smartphone, a notebook computer, a tablet computer, a desktop computer, or a smart wearable device, it may include a display and an audio component; if the computer device is implemented as a conventional server, a cloud server, a server cluster, etc., it may not include a display and an audio component. Only the RDMA device 101 is shown in FIG. 2A, and other hardware components are not shown.

The computer device 100 completes various functions without departing from various software codes, the software codes include user-mode software codes and kernel-mode software codes, the software codes are usually stored in a storage of the computer device 100, and when loaded and executed by a processor, the computer device 100 is controlled to complete corresponding functions.

The kernel-mode software code mainly refers to program code of an operating system (OS), e.g., file management and drivers of various hardware devices; and the user-mode software code includes program code of various applications installed and running on the computer device 100, and other program code that provides corresponding services for these applications. In this example, not all hardware and all software included in the computer device 100 are shown, and only a hardware part and a software part related to completion event notification to the RDMA application are shown.

As shown in FIG. 2A, at least an RDMA application 102 and a user-mode event management instance 103 responsible for providing a completion event notification service for the RDMA application 102 are installed and running on the computer device 100, and in a software-hardware architecture of the computer device 100, the user-mode event management instance 103 is located between the RDMA application 102 and the RDMA device 101, which on the one hand perceives a request related to a completion event notification initiated by the RDMA application 102, and carries out responses and processing for various requests, and on the other hand perceives whether there is information of a completion event sent by the RDMA device 101 and other various information related to the completion event, and reports the information to the RDMA application 102, thereby implementing a user-mode event notification mechanism.

In this example, the RDMA device refers to a hardware device supporting the RDMA programming interface specification (e.g., Verbs), for example, the RDMA device may be a network interface card (NIC), which is referred to as RNIC for short. The RDMA application is an upper-layer application supporting the RDMA protocol, i.e., an upper-layer application developed based on the RDMA programming interface specification, and may perform network transmission by using the RDMA protocol. The RDMA application in this example of the present disclosure may be an upper-layer application that supports only the RDMA protocol, or may be an upper-layer application that supports both the RDMA protocol and the TCP/IP protocol. For an RDMA application that supports both the RDMA protocol and the TCP/IP protocol, the RDMA application may be used in mixed running scenarios of the TCP/IP protocol and the RDMA protocol, and in this case, this example of the present disclosure focuses on a completion event notification process in a data transmission process based on the RDMA protocol.

The computer device 100 may include at least one RDMA device 101, the RDMA application 102 may use any RDMA device for data transmission with other network devices. The RDMA application needs to establish an RDMA connection when transmitting data with other network devices through an RDMA device, and create various queue resources such as a queue pair (QP), a completion channel (CC), and an event completion queue (CQ) that are required by the RDMA connection. The QP includes a send queue (SQ) and a receive queue (RQ), the SQ is used to store a work queue element (WQE) that is written by the RDMA application and that represents a send event, and the RQ is used to store a WQE that is written by the RDMA application and that represents a receive event. The CC is used to send notification information to the RDMA application when an IO task (the IO task includes a send task and a receive task) is completed on an RDMA connection corresponding to the CC, and the CQ is used to store a completion queue element (CQE) message generated when the RDMA connection completes the IO task.

The RDMA application notifies the NIC of the computer device 100 to send data and receive data respectively by writing the WQEs to the SQ and the RQ of the RDMA device. After completing a task (e.g., completing data sending or data receiving), the RDMA device may write a CQE to a CQ, and needs to notify the RDMA application which CQ has a completion event occurrence, so that the RDMA application 102 fetches a specific completion event, i.e., CQE, according to the notification information, and performs the next operation according to the CQE. It should be noted that, the RDMA device and the NIC may be integrated on the same network interface device, or may be implemented as two independent devices but communicatively connected to each other.

In the foregoing process, only a case where a completion event will be generated after the data sending is completed and a case where a completion event will be generated after the data receiving is completed are illustrated as examples. In an actual application, in a process in which the RDMA application performs data transmission through the RDMA device, the RDMA device may complete various work and generate various work completion events, which is not limited. Any completion event generated by the RDMA device may be notified to the RDMA application by using the user-mode event notification mechanism provided in the examples of the present disclosure.

In this example, the deployment implementation manner of the user-mode event management instance 103 on the computer device 100 is not limited, for example, the user-mode event management instance 103 may be deployed on the computer device 100 in a manner of a dynamic link library, and of course, the user-mode event management instance 103 may also be deployed on the computer device 100 in other manners such as an API, a plug-in, SDK, or an applet. The user-mode event management instance 103, the RDMA application 102, and the RDMA device 101 may cooperate with each other to implement a user-mode event notification mechanism.

In this example, in order to enable the user-mode event management instance 103, the RDMA application 102, and the RDMA device 101 to cooperate with each other to implement a user-mode event notification mechanism, at least a user-mode memory region needs to be created for the RDMA application, and the user-mode memory region is used for the RDMA device to directly write, when a completion event occurs in at least one CQ queue corresponding to the RDMA application, notification information that a completion event occurs in a CQ queue to the user-mode memory region. The notification information is used to identify that a completion event occurs in a CQ queue. In this example, each CQ queue may be uniquely identified by using CQ identification information, and the CQ identification information may be any information that can uniquely identify a CQ queue, for example, the CQ identification information may be Name, ID, or serial number, etc., of the CQ queue. For ease of differentiation and description, the CQ queue that is identified by the notification information and in which a completion event occurs is referred to as a target CQ queue, and CQ identification information of the target CQ queue is referred to as target CQ identification information. A detailed implementation of creating the user-mode memory region at least for the RDMA application may refer to the subsequent examples, and the details are not described herein again.

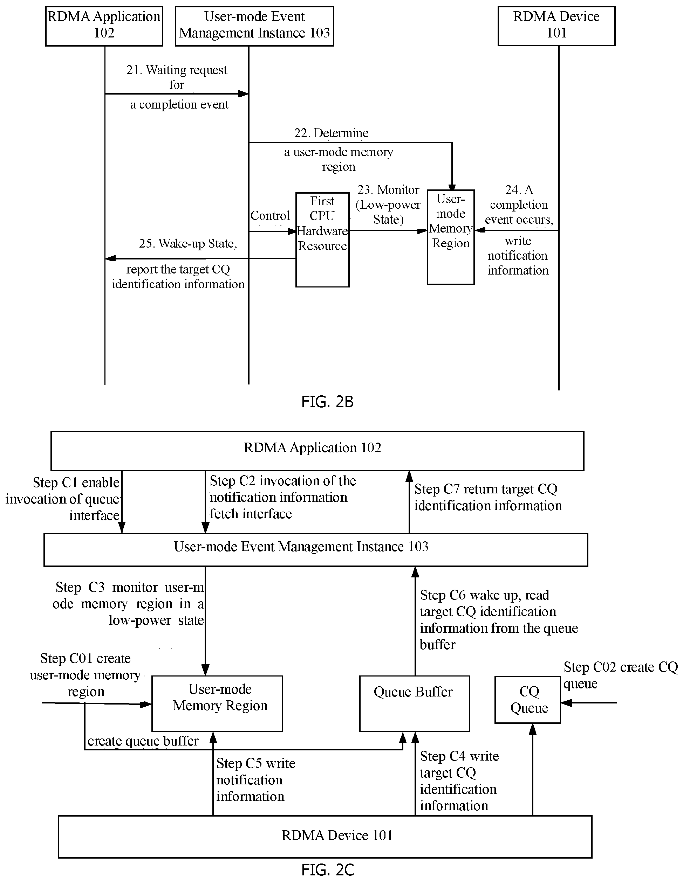

On the basis of creating the user-mode memory region at least for the RDMA application, as shown in FIG. 2B, a process in which the user-mode event management instance 103, the RDMA application 102, and the RDMA device 101 may cooperate with each other to implement the user-mode event notification mechanism includes the steps 21 to 25 as described below.

21. In a case where data transmission needs to be performed through the RDMA device (i.e., there is a communication requirement), the RDMA application initiates a waiting request for a completion event to the user-mode event management instance.

22. The user-mode event management instance determines, in response to the waiting request for a completion event initiated by the RDMA application, a user-mode memory region corresponding to the RDMA application.

The waiting request for a completion event initiated by the RDMA application carries related information identifying the user-mode memory region, for example, which may be an identifier of a CC channel corresponding to the RDMA application, and the CC channel is associated with at least one CQ queue and a user-mode memory region, corresponding to the RDMA application, where in a process of creating the CQ queue and the user-mode memory region for the RDMA application, the CQ queue and the user-mode memory region may be associated with the CC channel corresponding to the RDMA application respectively. Of course, the user-mode memory region of the RDMA application may also be identified by using other information, for example, an identifier of the RDMA application, which requires a preestablished association relationship between the identifier of the RDMA application and the user-mode memory region.

23. The user-mode event management instance controls a first CPU hardware resource to monitor in a low-power state whether a write event of notification information occurs in the user-mode memory region.

In this example, the running of the user-mode event management instance depends on the CPU hardware resources, and the CPU hardware resources are dynamically allocated by the operating system for the user-mode event management mechanism based on the scheduling and management mechanism of the CPU resources, which is not limited and concerned. Accordingly, in a running process of the RDMA application, the operating system also allocates CPU hardware resources for the RDMA application as the RDMA application runs, and of course, the CPU hardware resources are also dynamically allocated by the operating system for the RDMA application based on the CPU resource scheduling and management mechanism. The CPU hardware resources allocated to the RDMA application include the CPU hardware resources used for notifying the RDMA application of completion events. For ease of differentiation and description, the CPU hardware resources that are allocated by the RDMA application and used to notify the RDMA application of the completion events are referred to as the first CPU hardware resource.

The resource form of the first CPU hardware resource specifically depends on the hardware resource form of the CPU supported by the computer device. For example, if the hardware resource form of the CPU supported by the computer device is Hyper-threading CPU, and each Hyper-threading CPU includes a plurality of hardware threads, the first CPU hardware resource may be one CPU hardware thread in a specific Hyper-threading CPU. For another example, a hardware resource form of the CPU supported by the computer device is a multi-core CPU, and the first CPU hardware resource may be one CPU core in the multi-core CPU.

In this example, the first CPU hardware resource is used to notify the RDMA application of a completion event, and when no completion event occurs, the first CPU hardware resource is not released, but the user-mode event management instance 103 controls the first CPU hardware resource to monitor in a low-power state whether a write event of the notification information occurs in the user-mode memory region, which is equivalent to waiting for occurrence of the completion event in the low-power state. The low-power state is a state in which the first CPU hardware resource has relatively low power consumption, and the low-power state may include, but is not limited to, a sleep state, a waiting state, a light sleep state, a stopped state, etc. The notification information in the user-mode memory region is written by the RDMA device only when a completion event occurs in at least one CQ queue corresponding to the RDMA application, and therefore, when no write event of the notification information occurs in the user-mode memory region, it means that no completion event occurs in any CQ queue. During this period, the first CPU hardware resource does not need to report events to the RDMA application, allowing the first CPU hardware resource to wait for the occurrence of a completion event in a low-power state, which not only may save power consumption, but also can enable timely discovery of the occurrence of a completion event when a completion event occurs.

24. When a completion event occurs in at least one CQ queue, the RDMA device writes, to the user-mode memory region, notification information that a completion event occurs in a CQ queue.

25. When a write event occurs in the user-mode memory region, the user-mode event management instance wakes up the first CPU hardware resource, and controls the first CPU hardware resource to report the target CQ identification information corresponding to the notification information to the RDMA application, so as to notify the RDMA application that a completion event occurs in the target CQ queue corresponding to the target CQ identification information.

When a write event of notification information occurs in the user-mode memory region, it means that a completion event occurs in a CQ queue, and at this time, the first CPU hardware resource needs to report, to the RDMA application, information about which CQ queue has a completion event occurrence, which needs to wake up the first CPU hardware resource, so as to enable the first CPU hardware resource to exit the low-power state, and in the non-low-power state, report the target CQ identification information corresponding to the notification information to the RDMA application, to notify the RDMA application that the completion event occurs in the target CQ queue corresponding to the target CQ identification information.

In this example, on the one hand, the user-mode memory region is used to write notification information by the RDMA device when a completion event occurs in at least one CQ queue corresponding to the RDMA application, in other words, used to store the notification information written by the RDMA device; and on the other hand, a write event of the notification information that occurs in the user-mode memory region is used to wake up the first CPU hardware resource, to trigger the first CPU hardware resource to report, in a non-low-power state, target CQ identification information corresponding to the notification information to the RDMA application, to notify the RDMA application that the completion event occurs in the target CQ queue corresponding to the target CQ identification information.

In this example, combining the user-mode event management instance with the user-mode memory region corresponding to the RDMA application may, on the one hand, control the first CPU hardware resource to monitor in a low-power state whether a write event of notification information occurs in the user-mode memory region to perceive whether a completion event occurs in a CQ queue, and on the other hand, write the notification information to the user-mode memory region by the RDMA device when a completion event occurs in a CQ queue, instead of writing the notification information to an EQ queue in kernel mode. The event that the RDMA device writes the notification information to the user-mode memory region may wake up the first CPU hardware resource, so that the first CPU hardware resource is woken up in user mode, and after being woken up, directly notifies the RDMA application that a completion event occurs. The entire process does not need to pass through kernel mode, without context switching between kernel mode and user mode, thereby reducing code processing logic of kernel mode, shortening the paths and periods for notification of completion events from RDMA devices to RDMA applications, reducing the network communication delays of RDMA applications, and improving RDMA application performance.

In an example, the computer device 100 may use an CPU supporting user-mode control instructions. The user-mode control instructions refer to instructions that allow user-mode program code call to control an CPU state, and the user-mode control instructions include one or more user-mode control instructions that enable the CPU to enter a low-power state. The CPU supporting the user-mode control instructions may be a self-developed CPU, or may be a CPU supporting the user-mode control instructions bought from a CPU manufacturer, which is not limited. Based on this, the first CPU hardware resource may be controlled to execute one or more user-mode control instructions, so that the purpose of controlling the first CPU hardware resource to monitor in the low-power state whether a write event of notification information occurs in the user-mode memory region is achieved. Whether a single user-mode control instruction or a plurality of user-mode control instructions, these user-mode control instructions are used to instruct the first CPU hardware resource to execute the operations M1 to M3 as described below.

Operation M1: The first CPU hardware resource is instructed to fetch description information of a user-mode memory region, and determine, according to the description information, a user-mode memory region that needs to be monitored, where the description information of the user-mode memory region may be any information that can uniquely identify the memory region, e.g., may be, but is not limited to, address information (Address) and size information (Size) of the user-mode memory region.

Operation M2: The first CPU hardware resource is instructed to monitor whether a write event of notification information occurs in the user-mode memory region.

Operation M3: The first CPU hardware resource is instructed to enter a low-power state.

For example, the user-mode event management instance may control the first CPU hardware resource to execute a user-mode control instruction, where the user-mode control instruction instructs the first CPU hardware resource to execute the foregoing operations M1-M3, i.e., control the first CPU hardware resource to monitor in a low-power state whether a write event of notification information occurs in the user-mode memory region. The user-mode control instruction contains description information of the user-mode memory region, which is used by the first CPU hardware resource to determine the user-mode memory region that needs to be monitored. Alternatively, for example, the user-mode event management instance may control the first CPU hardware resource to execute a plurality of user-mode control instructions, and the plurality of user-mode control instructions cooperate with each other to instruct the first CPU hardware resource to execute the foregoing operations M1-M3, i.e., control the first CPU hardware resource to monitor in a low-power state whether a write event of notification information occurs in the user-mode memory region. At least one of the plurality of user-mode control instructions needs to contain description information of the user-mode memory region, which is used by the first CPU resource to determine the user-mode memory region that needs to be monitored.

In a case where the first CPU hardware resource is controlled to execute the plurality of user-mode control instructions, the plurality of user-mode control instructions cooperate with each other to instruct the first CPU hardware resource to execute the foregoing operations M1-M3. For example, the plurality of user-mode control instructions are implemented as three user-mode control instructions, and the three user-mode control instructions may execute operations M1-M3 respectively; for another example, the plurality of user-mode control instructions are implemented as two user-mode control instructions, where one user-mode control instruction executes operation M1 and operation M2, and the other user-mode control instruction executes operation M3; or one user-mode control instruction executes operation M1 and operation M3, and the other user-mode control instruction executes operation M2; and for another example, the plurality of user-mode control instructions are implemented as four user-mode control instructions, where two user-mode control instructions are used to execute operation M1, one user-mode control instruction is used to execute operation M2, and the last user-mode control instruction is used to execute operation M3, which is not limited. Regardless of which instruction manner, the instruction for controlling the first CPU hardware resource to execute the foregoing operation M1 needs to contain the description information of the user-mode memory region.

In some implementations, in a case where the first CPU hardware resource is controlled to execute the plurality of user-mode control instructions, the plurality of user-mode control instructions include a first user-mode control instruction and a second user-mode control instruction. The first user-mode control instruction includes description information of a user-mode memory region, the first CPU hardware resource may determine, according to the description information, a user-mode memory region that needs to be monitored, and the second user-mode control instruction is used to instruct the first CPU hardware resource to enter a low-power state, and monitor in the low-power state whether a write event of notification information occurs in the user-mode memory region. Based on this, the first CPU hardware resource may be controlled to execute the first user-mode control instruction, so that the first CPU hardware resource determines the user-mode memory region that needs to be monitored; and the first CPU hardware resource is controlled to execute the second user-mode control instruction, so as to control the first CPU hardware resource to enter the low-power state, and monitor in the low-power state whether a write event of notification information occurs in the user-mode memory region.

In an example, for some types of CPUs, the user-mode control instructions supported by the CPUs may include, but are not limited to, a monitor configuration instruction (e.g., umonitor), a monitor wait instruction (e.g., umwait), a monitor pause instruction (e.g., tpause), etc.

The monitor configuration instruction includes description information of the user-mode memory region, e.g., address information and size information of the user-mode memory region, and the address information and the size information of the user-mode memory region may be provided to the first CPU hardware resource by using the monitor configuration instruction, so that the first CPU hardware resource determines the user-mode memory region that needs to be monitored. The monitor wait instruction is used to enable the first CPU hardware resource to enter a low-power state, monitor the user-mode memory region in the low-power state, and wait for a write event of notification information to occur in the user-mode memory region until being woken up in response to the write event occurrence. In addition, the monitor wait instruction provides a timeout mechanism through a register. The first CPU hardware resource does not enter the low-power state without restriction. Instead, the first CPU hardware resource remains the low-power state until the value of TimeStamp Counter (TSC) exceeds a preset value, at which point the first CPU hardware resource exits the low-power state, and enters a "wake-up" state. The power consumption of the first CPU hardware resource in the wake-up state is higher than that of the first CPU hardware resource in the low-power state. The monitor pause instruction may enable the first CUP hardware resource to enter a pause state, where the pause state is a specific implementation of the low-power state.

Based on the foregoing description, the monitor configuration instruction and the monitor wait instruction may be used in combination, as the first user-mode control instruction and the second user-mode control instruction respectively; or, the monitor configuration instruction and the monitor pause instruction may be used in combination, as the first user-mode control instruction and the second user-mode control instruction respectively. Regardless of which instruction manner, the first CPU hardware resource may enter the corresponding low-power state by invoking the user-mode control instructions, to monitor in the low-power state whether a write event of notification information occurs in the user-mode memory region, thereby saving power consumption resources. In a usual case, the CPU may support different low-power levels. In this example of the present disclosure, the low-power state that the first CPU hardware resource needs to enter may be a certain low-power level by default, or a low-power level dynamically configured through a related instruction, which is not limited.

In the foregoing example of the present disclosure, when the completion event occurs in the CQ queue, the RDMA device writes the notification information to the user-mode memory region, so as to wake up the first CPU hardware resource, so that the first CPU hardware resource reports the target CQ identification information corresponding to the notification information to the RDMA application, so as to notify the RDMA application that the completion event occurs in the target CQ queue corresponding to the target CQ identification information. For example, the first CPU hardware resource, before reporting the target CQ identification information corresponding to the notification information to the RDMA application, needs to fetch target CQ identification information corresponding to the notification information.

In some implementations, target CQ identification information may be stored through a user-mode memory region or a queue buffer associated with the user-mode memory region. Based on this, the first CPU hardware resource may be controlled, according to the write position of the notification information, to read the target CQ identification information from the user-mode memory region or the queue buffer associated with the user-mode memory region, and report the target CQ identification information to the RDMA application. The write position of the notification information in the user-mode memory region may indicate the storage location of the target CQ identification information in the user-mode memory region or in the queue buffer associated with the user-mode memory region.

In this example of the present disclosure, the user-mode memory region may be associated with a queue buffer, or may not be associated with a queue buffer. When the user-mode memory region is associated with a queue buffer, the queue buffer is used by the RDMA device to write, when a completion event occurs in at least one CQ queue, CQ identification information corresponding to the CQ queue in which the completion event occurs. In other words, the user-mode memory region is used to carry the notification information that a completion event occurs in a CQ queue, and the queue buffer is used to carry the target CQ identification information of the target CQ queue in which the completion event occurs. When the user-mode memory region is not associated with the queue buffer, the user-mode memory region is not only used to write notification information by the RDMA device when a completion event occurs in at least one CQ queue, but also used to write the target CQ identification information by the RDMA device when the completion event occurs in the corresponding CQ queue. In other words, the user-mode memory region is used to carry, at the same time, the notification information that a completion event occurs in a CQ queue and the target CQ identification information of the target CQ queue in which the completion event occurs.

In an example, for a solution in which the user-mode memory region carries, at the same time, the notification information that a completion event occurs in a CQ queue and the target CQ identification information of the target CQ queue in which the completion event occurs, in a specific implementation, the notification information may include the target CQ identification information, i.e., the notification information and the target CQ identification information may be implemented as the same information. In this way, the RDMA device only needs to execute a write operation once to the user-mode memory region, and writes the target CQ identification information in the user-mode memory region as notification information, which is beneficial to improve write efficiency. The write position of the notification information is the write position of the target CQ identification information. In another specific implementation, the notification information and the target CQ identification information are two pieces of different information, and The RDMA device may perform a write operation once to the user-mode memory region, which writes the notification information in the user-mode memory region; and then, perform another write operation once to the user-mode memory region, which writes the target CQ identification information in the user-mode memory region; and the write position of the notification information is associated with, e.g., adjacent to, the write position of the target CQ identification information.

It should be noted that, regardless of whether the user-mode memory region is associated with a queue buffer, the user-mode memory region and other RDMA resources (e.g., a CC channel, a CQ queue, etc.) may be created for the RDMA application in a resource initialization stage before data transmission is performed by using the RDMA device, or some RDMA resources (e.g., a user-mode memory region, a CQ queue, etc.) may also be dynamically created for the RDMA application as required in a data transmission process. For example, regardless of at which stage, a method for creating the user-mode memory region includes that the RDMA application may initiate an RDMA resource initialization request to the user-mode event management instance, where the RDMA resource initialization request is used to request various resources needed to create an RDMA application, e.g., at least one CQ queue and the user-mode memory region that correspond to the RDMA application. Based on this, the user-mode event management instance may create at least one CQ queue and user-mode memory regions for the RDMA application in response to the RDMA resource initialization request initiated by the RDMA application, and provide description information of the created at least one CQ queue and the user-mode memory region to the RDMA device, so that the RDMA device writes notification information to the user-mode memory region when a completion event occurs in the at least one CQ queue.

The correspondence between a user-mode memory region and the at least one CQ queue is not limited. For example, the at least one CQ queue may share one user-mode memory region, and in a case where there are a plurality of CQ queues, the plurality of CQ queues may share two or more user-mode memory regions, and of course, each CQ queue may have a corresponding user-mode memory region, which is not limited. In some implementations, regardless of a correspondence between a user-mode memory region and at least one CQ queue, the user-mode memory region may be associated with a queue buffer, or may not be associated with a queue buffer. The process of creating RDMA resources (e.g., a user-mode memory region, a CQ queue, and a queue buffer, etc.) and the process of reporting the target CQ identification information to the RDMA application based on these RDMA resources are illustrated by examples below.

Example Y1: The user-mode memory region is not associated with a queue buffer, the quantity of the user-mode memory regions is at least one, and the at least one user-mode memory region is in one-to-one correspondence with the at least one CQ queue. From the perspective of creating resources, in response to the RDMA resource initialization request initiated by the RDMA application, at least one CQ queue and at least one user-mode memory region are created for the RDMA application, and the description information of the created at least one CQ queue and at least one user-mode memory region is provided to the RDMA device, so that the RDMA device writes notification information to the corresponding user-mode memory region when a completion event occurs in the at least one CQ queue. Accordingly, from the perspective of writing notification information by the RDMA device, when a completion event occurs in a CQ queue, the RDMA device may write the notification information to a user-mode memory region corresponding to the CQ queue.

Based on this, under control of the user-mode event management instance, the first CPU hardware resource monitors the at least one user-mode memory region in a low-power state, and when detecting that a write event of the notification information occurs, the first CPU hardware resource on the one hand is woken up and on the other hand, according to the write position of the notification information, determines a target user-mode memory region to which the notification information is written in the at least one user-mode memory region; and the first CPU hardware resource is controlled to read target CQ identification information from the target user-mode memory region, and report the target CQ identification information to the RDMA application, where the target CQ identification information identifies that a completion event occurs in a target CQ queue corresponding to the target user-mode memory region.

In this example Y1, the implementation of the notification information is not limited. For example, the notification information may be implemented as the target CQ identification information. When a completion event occurs in the target CQ queue, the RDMA device may write the target CQ identification information in the user-mode memory region, and use the target CQ identification information as the notification information that "a completion event occurs in the target CQ queue".

For another example, the notification information is different from the target CQ identification information. When a completion event occurs in the target CQ queue, the RDMA device may write the target CQ identification information in addition to the notification information in the user-mode memory region. At this time, the notification information may be any information capable of indicating that a completion event occurs in the target CQ queue, e.g., the notification information may be any number, letter, or symbol alone or in combination. For example, when no information is written in the user-mode memory region, a value in the user-mode memory region is "0", which means that no completion event occurs in the target CQ queue; and when notification information is written in the user-mode memory region, the RDMA device writes "1" in the user-mode memory region, which means that a completion event occurs in the target CQ queue. It should be noted that, in this implementation, the content of the notification information itself has no meaning, so the notification information written by the RDMA device to the user-mode memory region each time may be the same or may be different. In this example, an event of writing notification information is focused on; if the write event occurs, it means that a completion event occurs in the CQ queue; and the content of the notification information may not be much focused on.

Example Y2: The user-mode memory region is associated with a queue buffer, where the correspondence between a user-mode memory region and the at least one CQ queue may be that the at least one CQ queue corresponds to a user-mode memory region (i.e., sharing the same user-mode memory region), or may be that each CQ queue corresponds to a user-mode memory region, which is not limited. In a case where the at least one CQ queue shares a user-mode memory region, in addition to the case where the same user-mode memory region is shared, a plurality of user-mode memory regions may be shared.

In this example, regardless of whether at least one CQ queue corresponds to a user-mode memory region or each CQ queue corresponds to a user-mode memory region, considering that the space of the user-mode memory region is limited, in order to save memory space, a queue buffer may be further created for the RDMA application, and the user-mode memory region is associated with the queue buffer. For example, when responding to an RDMA resource initialization request initiated by an RDMA application, in addition to creating at least one CQ queue and one or more user-mode memory regions for the RDMA application, a queue buffer may further be created for the RDMA application, and the user-mode memory region is associated with the queue buffer. For another example, the RDMA application may initiate a queue buffer creation request to the user-mode event management instance, and the user-mode event management instance creates a queue buffer for the RDMA application in response to the queue buffer creation request initiated by the RDMA application, and associates the user-mode memory region corresponding to the RDMA application with the queue buffer.

Accordingly, when a completion event occurs in the at least one CQ queue, in addition to writing the notification information to the user-mode memory region corresponding to the CQ queue in which the completion event occurs, the RDMA device may further write, to the queue buffer, the target CQ identification information corresponding to the target CQ queue in which the completion event occurs. Accordingly, under the control of the user-mode event management instance, the first CPU hardware resource monitors in the low-power state whether a write event of notification information occurs in the user-mode memory region; and when detecting that a write event of the notification information occurs, on the one hand, the first CPU hardware resource is woken up and on the other hand, according to the write position of the notification information, the first CPU hardware resource is controlled to read the latest written CQ information from the queue buffer as the target CQ identification information. For example, according to the write position of the notification information, it may be determined that the notification information is written in the user-mode memory region; and the first CPU hardware resource is controlled to read, from the queue buffer associated with the user-mode memory region, the latest written CQ information as the target CQ identification information.

In this example Y2, since the notification information is written in the user-mode memory region and the target CQ identification information is written in the queue buffer, the notification information and the target CQ identification information are two separate pieces of information. In this example Y2, the content of the notification information itself has no meaning, so the notification information written by the RDMA device to the user-mode memory region each time may be the same, or may be different. In this example, a event of writing notification information is focused on; if the write event occurs, it means that a completion event occurs in the CQ queue; and the content of the notification information may not be much focused on. Of course, the implementation of the notification information is not limited in this example Y2, which may be any information capable of indicating that a completion event occurs in the target CQ queue, e.g., the notification information may be any number, letter, or symbol alone or in combination.

In this example, the manner of creating an RDMA resource for an RDMA application may be preset, either the first resource creation mode or the second resource creation mode is used, which is fixed for the RDMA application and is also the same for different RDMA applications. The first resource creation mode is a creation mode in which at least one CQ queue, a user-mode memory region shared by the at least one CQ queue, and a queue buffer associated with the user-mode memory region are created by default for the RDMA application. The second resource creation mode is a creation mode in which at least one CQ queue and one or more user-mode memory regions in a one-to-one correspondence with the at least one CQ queue are created by default for the RDMA application, and the user-mode memory regions are not associated with a queue buffer. In the first resource creation mode, at least one CQ queue shares a user-mode memory region, the user-mode memory region is associated with a queue buffer, the user-mode memory region is used to carry the notification information that a completion event occurs in a CQ queue, and the queue buffer is used to carry the target CQ identification information of the target CQ queue in which the completion event occurs. In the second resource creation mode, each of the at least one CQ queue has a corresponding user-mode memory region, the user-mode memory region is not associated with a queue buffer, and the user-mode memory region is used to carry, at the same time, the notification information that a completion event occurs in a CQ queue and the target CQ identification information of the target CQ queue in which the completion event occurs.

In addition to presetting the resource creation mode, in an example, the RDMA application is allowed to select the resource creation mode to be used, i.e., the RDMA application may select to use the first resource creation mode or the second resource creation mode; for different RDMA applications, different resource creation modes may be selected for use; and in different data transmission processes for the same RDMA application, different resource creation modes may also be selected for use.

Based on the foregoing description, the RDMA application may select a target resource creation mode to be used from the first resource creation mode and the second resource creation mode, where the target resource creation mode includes information about whether a queue buffer needs to be created for the RDMA application, and the target resource creation mode is provided to the user-mode event management instance. Accordingly, the user-mode event management instance may fetch the target resource creation mode selected for use by the RDMA application; in a case where the target resource creation mode is the first resource creation mode, not only at least one CQ queue and a user-mode memory region shared by the at least one CQ queue are created for the RDMA application, but also a queue buffer is required to be created for the RDMA application, and the user-mode memory region is associated with the queue buffer; and in a case where the target resource creation mode is the second resource creation mode, it is only necessary to create at least one CQ queue for the RDMA application and create a one-to-one corresponding user-mode memory region for the at least one CQ queue, and the operation of creating the queue buffer for the RDMA application are prohibited.

In an example, an implementation in which the user-mode event management instance fetches the target resource creation mode selected for use by the RDMA application is not limited. Below are examples for illustration.

Example Z1: In a resource initialization stage, the RDMA application initiates an RDMA resource initialization request to the user-mode event management instance, where the RDMA resource initialization request includes the target resource creation mode, then the user-mode event management instance may fetch, from the RDMA resource initialization request, the target resource creation mode selected for use by the RDMA application. In example Z1, the RDMA resource initialization request may be extended to allow more information to be carried, and the RDMA application selects the resource creation mode through the extended RDMA resource initialization request.

Example Z2: In the resource initialization stage, the RDMA application initiates a resource creation mode selection request to the user-mode event management instance, where the request includes the target resource creation mode required by the RDMA application, and the user-mode event management instance may fetch, from the resource creation mode selection request in response to the resource creation mode selection request initiated by the RDMA application, the target resource creation mode selected for use by the RDMA application. In example Z2, in addition to the RDMA resource initialization request, a request is newly added, and the RDMA application selects the resource creation mode through the newly added request.

In an example of the present disclosure, a transport interface layer (e.g., which may be, but is not limited to, a Verbs API interface layer) used for RDMA may be deployed on the computer device 100, and a plurality of standard API interfaces for implementing an event notification mechanism are provided in the transport interface layer. In this example, in order to maintain compatibility with existing RDMA applications, in a case where the programming interface of the RDMA application is not modified or modified as little as possible, the example improves the functionality of the relevant API interfaces based on the API interfaces in the transport interface layer used to implement the event notification mechanism, so as to implement the user-mode event management instance provided in the example of the present disclosure. That is, when an RDMA application initiates an invocation to functionally improved API interfaces, the execution logic corresponding to these API interfaces may form the user-mode event management instance in the example of the present disclosure, to provide a user-mode event notification service for the RDMA application that initiates the interface invocation. A plurality of API interfaces included in the transport interface layer provided in the example are illustrated by the examples below.
1) A completion event channel creation interface (e.g., which may be an API interface in a Verbs API interface layer: ibv_create_comp_channel) creates a completion event channel which is also referred to as a CC channel.
2) A completion event queue creation interface (e.g., which may be an API interface in a Verbs API interface layer: ibv_create_cq) creates a completion event queue which is also referred to as a CQ queue, and establishes an association relationship between the CC channel and the CQ queue.
3) An enable queue interface (e.g., which may be an API interface in a Verbs API interface layer: ibv_req_notify_cq) enables the event notification function of a CQ queue, i.e., indicating to notify the RDMA application through the CC channel when a new completion queue element (CQE) is generated in a CQ queue.
4) A notification information fetch interface (e.g., which may be an API interface in a Verbs API interface layer: ibv_get_cq_event) fetches a CQ queue in which a completion event occurs.
5) A completion event fetch interface (e.g., which may be an API interface in a Verbs API interface layer: ibv_poll_cq) fetches a completion event in the CQ queue, i.e., fetches a CQE element in the CQ queue.
6) A completion event acknowledgement interface (e.g., which may be an API interface in the Verbs API interface layer: ibv_ack_cq_events) acknowledges a completion event. All completion events are read by using the ibv_get_cq_event interface, and after processing the completion events, the RDMA application may acknowledge the completion events by using the ibv_ack_cq_events interface, so that the user-mode event management instance performs state synchronization on the completion events, ensuring that the recorded quantity of to-be-processed completion events is consistent with the quantity of actual to-be-processed completion events, and ensuring that all completion events are processed, thereby avoiding omission.

For example, to maintain compatibility with existing RDMA applications, an interface in a transport interface layer corresponding to the RDMA application is not modified, but an internal function of the interface is improved, and in combination with the user-mode control instructions supported by the CPU hardware resource, the user-mode event management instance of the example of the present disclosure is implemented, so that the event notification about the RDMA application is directly completed in user mode instead of passing through kernel mode, thereby improving event notification efficiency and reducing an event notification delay. With reference to the following procedure, in the example of the present disclosure, functional improvements are mainly performed on the API interface in step B1 or B2 of the resource initialization stage and the API interface in step B4, so as to implement the user-mode event management instance in the example of the present disclosure. The RDMA application may implement event notification through a plurality of API interfaces included in a transport interface layer (e.g., a Verbs API interface layer), and an overall procedure of event notification described from a perspective of the RDMA application is as follows, including step B1 to step B6.

Step B1: The RDMA application invokes the completion event channel creation interface (e.g., ibv_create_comp_channel), and sends context information (context) of the RDMA device to the user-mode event management instance, to request the user-mode event management instance to create a CC channel between the RDMA application and the RDMA device.

Before the RDMA application uses the RDMA function, resource initialization needs to be performed, and in a resource initialization stage, a CC channel may be created. The resource initialization stage may be an initialization stage in which the RDMA application is started to run, or may be a stage in which the RDMA function is enabled during running of the RDMA application. The resource created in the resource initialization stage may be used multiple times in a subsequent event notification process without being created again.

Step B2: The RDMA application invokes a completion event queue creation interface (e.g., ibv_create_cq), to request the user-mode event management instance to create a CQ queue for the RDMA application, and establish a correspondence between the CC channel and the CQ queue.

One RDMA application may correspond to one or more CQ queues, which means that one CC channel may correspond to one CQ queue, or a plurality of CQ queues. Step B2 may also be completed in the resource initialization stage, the CQ queue created in the resource initialization stage may be used multiple times in a subsequent event notification process.

Step B3: The RDMA application invokes the enable queue interface (for example, ibv_req_notify_cq) to enable event notification of the CQ queue, so that when a CQE message is written in the CQ queue, the RDMA application is notified that a completion event occurs in the CQ queue through a CC channel associated with the CQ queue.

When the RDMA application uses the RDMA device to perform data transmission with another network device, an RDMA connection needs to be established, and event notification of the CQ queue may be enabled before, after, or in a process of establishing the RDMA connection.

Step B4: The RDMA application invokes a notification information fetch interface (e.g., ibv_get_cq_event), to fetch the identification information of a CQ queue in which the completion event occurs in the CC channel.

Step B4 may determine which CQ has a completion event occurrence, but each CQ queue corresponds to a plurality of RDMA connections, step B4 cannot distinguish which RDMA connection has a completion event occurrence, and cannot distinguish the type or category of the completion event in the CQ queue.

Step B5: The RDMA application invokes the completion event fetch interface (e.g., ibv_poll_cq), to fetch a specific completion event from the CQ queue in which the completion event occurs, i.e., to fetch a CQE element in the CQ queue, so that according to content of the CQE element, which QP has a completion event occurrence may be determined, i.e., the RDMA connection, and the type of the completion event, e.g., a read event or a write event are determined.

Step B6: The RDMA application invokes the completion event acknowledgement interface (e.g., ibv_ack_cq_events) to acknowledge the completion event, to ensure that all fetched notification events can be processed.

It should be noted that, step B1 and step B2 are steps of performing resource initialization before the RDMA device is used to perform data transmission, and the steps B3-B6 describe a process of performing completion event notification in a process of using the RDMA device for data transmission, and these steps are steps that need to be executed in a loop.

As shown in FIG. 2C, an entire flow of event notification described from the perspective of the user-mode event management instance includes step C0 to step C9 below.

Step C0: Resource creation is initialized. Specifically, the following resources are created and allocated, specifically including step C01 to step C02.

Step C01: In response to an invocation request initiated by the RDMA application to the completion event channel creation interface (e.g., ibv_create_comp_channel), a CC channel and a user-mode memory region are created for the RDMA application according to the context information of the RDMA device included in the invocation request, and an association relationship between the user-mode memory region and the CC channel is established.

In some implementations, in step C01, a queue buffer associated with the user-mode memory region may further be created for the RDMA application. In the example shown in FIG. 2C, the user-mode memory region and the queue buffer associated with the user-mode memory region are created at the same time for the RDMA application which is illustrated as an example.

Step C02: In response to an invocation request initiated by the RDMA application to the completion event queue creation interface (e.g., ibv_create_cq), at least one CQ queue is created for the RDMA application according to the identifier of the CC channel included in the invocation request, and an association relationship between the CC channel and the at least one CQ queue is established.

In FIG. 2C, only step C01 and step C02 are shown, and step C0 is not shown.

One of the roles of the user-mode memory region is: to write notification information by the RDMA device to the user-mode memory region in a case where a completion event occurs in at least one CQ queue, i.e., to store the notification information that the completion event occurs. The write event is used to trigger the first CPU hardware resource to report an event notification to the RDMA application, e.g., the RDMA device may modify a value in the user-mode memory region from "0" to "1", which means that a completion event occurs, or the RDMA device may further write identification information of the CQ queue in the user-mode memory region, which means that a completion event occurs in the CQ queue.

A second role of the user-mode memory region is: to enable the first CPU hardware resource to monitor in the low-power state whether a write event of notification information occurs in the user-mode memory region, achieving a purpose of waiting in the low-power state for occurrence of a completion event, until the first CPU hardware resource is woken up when the write event of the notification information occurs in the user-mode memory region. After the first CPU hardware resource is woken up, the identification information of the CQ queue in which the completion event occurs is reported to the RDMA application. The first CPU hardware resource is dynamically allocated to the RDMA application, and is used to notify the RDMA application of a completion event.

A role of the queue buffer is: to write by the RDMA device to the user-mode memory region, when a completion event occurs in at least one CQ queue, the CQ identification information of the CQ queue in which the completion event occurs, i.e., to store the CQ identification information of the CQ queue in which the completion event occurs.

It is stated here that, the process of creating the user-mode memory region and the queue buffer may be implemented in step C01, or may be implemented in step C02.

Step C1: In response to an invocation request initiated by the RDMA application to the enable queue interface (e.g., ibv_req_notify_cq), event notification of the CQ queue is enabled, so that when a CQE message is written in the CQ queue, the RDMA application is notified that a completion event occurs in the CQ queue through a CC channel associated with the CQ queue.

Step C2: In response to an invocation request initiated by the RDMA application to the notification information fetch interface (e.g., ibv_get_cq_event), a user-mode memory region corresponding to the RDMA application is fetched, to wait for a completion event to occur in the at least one CQ queue.

Step C3: the first CPU hardware resource is controlled to monitor in a low-power state whether a write event of notification information occurs in the user-mode memory region.

If a completion event does not occur when the RDMA application initiates an invocation to the notification information fetch interface (e.g., ibv_get_cq_event), the user-mode control instruction (e.g., the umonitor instruction and the umwait instruction, etc.) is invoked, so as to enable the first CPU hardware resource to be in a low-power state (e.g., a pause state or a waiting state) to monitor in the low-power state whether the write event of the notification information occurs in the user-mode memory region, i.e., wait in the low-power state for an occurrence of a completion event; and if the completion event has occurred when the RDMA application initiates an invocation to the notification information fetch interface (e.g., ibv_get_cq_event), the process directly jumps to step C6.

Taking the user-mode control instructions, umonitor and umwait, as an example, the logic for executing the wait-for-completion-event is as follows: in response to the invocation of the notification information fetch interface (e.g., ibv_get_cq_event), the first CPU hardware resource (e.g., a hardware thread) is controlled to execute the umonitor instruction, and the user-mode control instruction is associated with the address information and the size information of the user-mode memory region, specifically, the address information and the size information of the user-mode memory region are provided to the hardware thread as an input parameter of the user-mode control instruction, and the umwait instruction is executed, so that the hardware thread monitors whether a write event of the notification information occurs in the user-mode memory region in a sleep state, and when it is detected that the write event of the notification information occurs, the hardware thread is woken up itself. The foregoing logic for executing the wait-for-completion-event is entirely completed by hardware, so that the power consumption is relatively low and resources are saved.

Step C4: When the RDMA device needs to report the completion event to the RDMA application, if the target CQ identification information of the target CQ queue in which the completion event occurs needs to be buffered and stored, the target CQ identification information is written in the queue buffer prepared in step C0, which means that the completion event occurs in the target CQ queue.

Step C5: The user-mode memory region in step C0 is updated, where once a completion event occurs in the CQ queue, the user-mode memory region may be set from 0 to 1, to write notification information to the user-mode memory region, which means that a completion event occurs in the CQ queue, but the specific CQ queue in which the completion event occurred cannot be reflected by the information in the user-mode memory region, and of course, identification information of the CQ queue may also be written in the user-mode memory information, which is not limited.

An execution sequence of step C4 and step C5 is not limited, for example, step C4 may be executed first, then step C5 may be executed, or step C5 may be executed first, then step C4 may be executed, or step C4 and step C5 may be executed at the same time.

Step C6: The first CPU hardware resource (e.g., a hardware thread) detects that notification information is written in the user-mode memory region, the first CPU hardware resource is woken up, and then reads the target CQ identification information of the target CQ queue from the queue buffer.

Step C7: The target CQ identification information is returned to the RDMA application through the application invoking a notification information fetch interface (e.g., ibv_get_cq_event).

In some examples, after step C7, the process may further include the following steps C8 and C9, which are not shown in FIG. 2C.

Step C8: In response to an invocation of the completion event fetch interface (for example, ibv_poll_cq) by the RDMA application, a specific completion event is fetched from the CQ queue in which the completion event occurs, i.e., a CQE element is fetched in the CQ queue, where the CQE element includes the type and the category of the completion event, and the CQE of the completion event is returned to the RDMA application.

Step C9: In response to the invocation of the completion event acknowledgement interface (e.g., ibv_ack_cq_events) by the RDMA application, the completion event is acknowledged.

In the example, by using the feature that the CPU in the computer device allows the user-mode program to set the user-mode program to a low-power state, the completion event of the RDMA device may be directly notified to user-mode, which not only reduces the overhead of context switching between user mode and kernel mode, but also reduces the path length of the completion event notification, thereby achieving better RDMA communication performance. In addition, the user-mode event management instance in this example is implemented based on the existing transport interface of the RDMA. By expanding the functionality of the transport interface, compatibility with the existing transmission interface may be maintained at the same time, and the RDMA application does not need any modification.

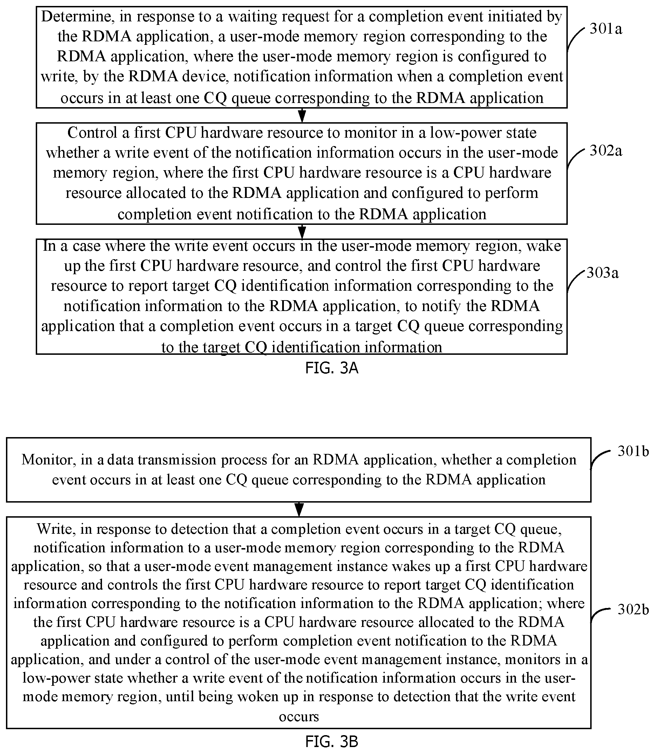

FIG. 3A is a flowchart of an RDMA event management method according to an example of the present disclosure, and the method is applicable to the user-mode event management instance provided in the foregoing examples. As shown in FIG. 3A, the method includes: 301a, determining, in response to a waiting request for a completion event initiated by the RDMA application, a user-mode memory region corresponding to the RDMA application, where the user-mode memory region is configured for writing of notification information by the RDMA device when a completion event occurs in at least one CQ queue corresponding to the RDMA application; 302a, controlling a first CPU hardware resource to monitor in a low-power state whether a write event of the notification information occurs in the user-mode memory region, where the first CPU hardware resource is a CPU hardware resource allocated to the RDMA application and configured to perform completion event notification to the RDMA application; and 303a, in a case where the write event occurs in the user-mode memory region, waking up the first CPU hardware resource, and controlling the first CPU hardware resource to report target CQ identification information corresponding to the notification information to the RDMA application, to notify the RDMA application that a completion event occurs in a target CQ queue corresponding to the target CQ identification information.

In an example, controlling the first CPU hardware resource to monitor in a low-power state whether a write event of the notification information occurs in the user-mode memory region includes: controlling the first CPU hardware resource to execute one or more user-mode control instructions, to control the first CPU hardware resource to monitor in a low-power state whether a write event of the notification information occurs in the user-mode memory region; where the one or more user-mode control instructions include the description information of the user-mode memory region, which is used by the first CPU resource to determine the user-mode memory region that needs to be monitored.

In an example, controlling the first CPU hardware resource to execute a plurality of user-mode control instructions to control the first CPU hardware resource to monitor in the low-power state whether a write event of notification information occurs in the user-mode memory region includes: controlling the first CPU hardware resource to execute a first user-mode control instruction, where the first user-mode control instruction includes description information of the user-mode memory region, which is used by the first CPU hardware resource to determine the user-mode memory region that needs to be monitored; and controlling the first CPU hardware resource to execute the second user-mode control instruction, to control the first CPU hardware resource to enter a low-power state, and monitor in the low-power state whether a write event of the notification information occurs in the user-mode memory region.

In an example, controlling the first CPU hardware resource to report the target CQ identification information corresponding to the notification information to the RDMA application includes: controlling, according to the write position of the notification information, the first CPU hardware resource to read the target CQ identification information from the user-mode memory region or the queue buffer associated with the user-mode memory region, and report the target CQ identification information to the RDMA application.

In an example, the method provided in the example of the present disclosure further includes: creating at least one CQ queue and one or more user-mode memory regions for the RDMA application in response to an RDMA resource initialization request initiated by the RDMA application, so that the RDMA device writes notification information when a completion event occurs in the at least one CQ queue.

In an example, the quantity of the user-mode memory regions is at least one, and the at least one user-mode memory region is in one-to-one correspondence with the at least one CQ queue; accordingly, controlling, according to the write position of the notification information, the first CPU hardware resource to read the target CQ identification information from the user-mode memory region or the queue buffer associated with the user-mode memory region includes: according to the write position of the notification information, determining a target user-mode memory region to which the notification information is written in the at least one user-mode memory region; and controlling the first CPU hardware resource to read target CQ identification information from the target user-mode memory region, where the target CQ identification information identifies that a completion event occurs in a target CQ queue corresponding to the target user-mode memory region.

In an example, the notification information is target CQ identification information.

In an example, each user-mode memory region is further used for the RDMA device to write target CQ identification information when a completion event occurs in a corresponding CQ queue; accordingly, the notification information is different from the target CQ identification information.

In an example, the method in the example further includes: in response to the RDMA resource initialization request initiated by the RDMA application, creating a queue buffer for the RDMA application, and associating the user-mode memory region with the queue buffer; where the queue buffer is used for the RDMA device to write, when a completion event occurs in at least one CQ queue, CQ identification information corresponding to the CQ queue in which the completion event occurs; and accordingly, according to the write position of the notification information, reading the target CQ identification information from the user-mode memory region or the queue buffer associated with the user-mode memory region includes: according to the write position of the notification information, controlling the first CPU hardware resource to read the latest written CQ information from the queue buffer as the target CQ identification information.

In an example, before creating a queue buffer for the RDMA application, the method further includes: fetching a target resource creation mode selected for use by the RDMA application; when the target resource creation mode is the first resource creation mode, creating a queue buffer for the RDMA application, and associating a user-mode memory region with the queue buffer; and when the target resource creation mode is the second resource creation mode, creating a one-to-one corresponding user-mode memory region for at least one CQ queue, and prohibiting the operation of creating the queue buffer for the RDMA application.

In an example, fetching the target resource creation mode selected for use by the RDMA application includes: fetching the target resource creation mode selected for use by the RDMA application from the RDMA resource initialization request; or fetching the target resource creation mode selected for use by the RDMA application from a resource creation mode selection request in response to the resource creation mode selection request initiated by the RDMA application.

In an example, notification information written by the RDMA device in the user-mode memory region each time is the same or different.

In an example, the first CPU hardware resource is a CPU hardware thread in a hyper-threading CPU, or a CPU core in a multi-core CPU.

FIG. 3B is a flowchart of another RDMA event management method according to an example of the present disclosure. As shown in FIG. 3B, the method includes: 301b, monitoring, in a data transmission process for an RDMA application, whether a completion event occurs in at least one CQ queue corresponding to the RDMA application; and 302b, writing, in response to detection that a completion event occurs in a target CQ queue, notification information to a user-mode memory region corresponding to the RDMA application, so that a user-mode event management instance wakes up a first CPU hardware resource and controls the first CPU hardware resource to report target CQ identification information corresponding to the notification information to the RDMA application; where the first CPU hardware resource is a CPU hardware resource allocated to the RDMA application and configured to, perform completion event notification to the RDMA application, and under a control of the user-mode event management instance, monitor in a low-power state whether a write event of the notification information occurs in the user-mode memory region, until being woken up in response to detection that the write event occurs.

The user-mode event management instance is located between the RDMA application and the RDMA device and is used to perform completion event notification for the RDMA application. In addition, to perform completion event notification for the RDMA application, the user-mode event management instance further creates RDMA resources for the RDMA application, where the created RDMA resources are resources required for completion event notification for the RDMA application.

In an example, the method provided in the example of the present disclosure further includes: receiving description information of the at least one CQ queue and description information of the user-mode memory region that are sent by the user-mode event management instance; and determining, according to the description information of the at least one CQ queue and the description information of the user-mode memory region, the at least one CQ queue and the user-mode memory region, respectively; where the at least one CQ queue and the user-mode memory region are RDMA resources that are created by the user-mode event management instance for the RDMA application and used to perform completion event notification.

The detailed implementations of the RDMA event management method and the user-mode event management instance may refer to the example shown in FIG. 2A, which are not described herein again.

In the RDMA event management method provided in the examples of the present disclosure, a user-mode event management instance for event notification is added between an RDMA application and an RDMA device. Based on the user-mode event management instance, in an event notification process for the RDMA application, a CPU hardware resource used to perform event notification for the RDMA application may be enabled to wait for a completion event to occur in a low-power state, to save power consumption; when the completion event occurs, the RDMA device may be enabled to "wake up" the CPU hardware resource in user mode; and after the CPU hardware resource is woken up, the CPU hardware resource may directly notify the RDMA application that a completion event occurs. The entire process does not need to pass through kernel mode, and there is no need to switch context between kernel mode and user mode, thereby reducing code processing logic of kernel mode, shortening the paths and periods for completion event notification from RDMA devices to RDMA applications, reducing the network communication delays of RDMA applications, and improving RDMA application performance.

It should be noted that, the execution subjects of each step of the method provided in the foregoing example may be the same device, or the method may also be executed by different devices as the execution subjects. For example, the execution subject of step 301a to step 303a may be device A; and for another example, the execution subject of step 301a and step 302a may be device A, and the execution subject of step 303a may be device B.

In addition, in some processes described in the foregoing examples and the accompanying drawings, a plurality of operations appearing in a specific order are included. However, it should be clearly understood that, these operations may be executed out of the order in which they appear herein or executed in parallel, the sequence numbers of the operations, such as 301a, 302a, etc., are only used to distinguish different operations, and the sequence numbers themselves do not represent any execution order. In addition, these processes may include more or fewer operations, and these operations may be performed sequentially or in parallel. It should be noted that descriptions such as "first" and "second" in this specification are used to distinguish between different messages, devices, modules, etc., and do not represent a sequence, and "first" and "second" are not limited to different types.

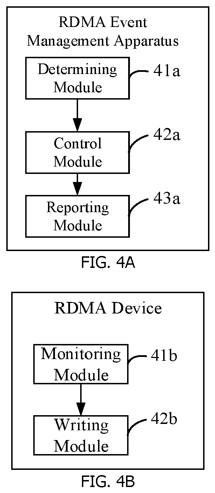

FIG. 4A is a schematic structural diagram of an RDMA event management apparatus according to an example of the present disclosure, where the apparatus may be applied to any computer device including an RDMA application and an RDMA device, located between the RDMA application and the RDMA device, and used to implement functions of the user mode event management instance in the foregoing example. As shown in FIG. 4A, the apparatus includes: a determining module 41a, a control module 42a, and a reporting module 43a.

The determining module 41a is configured to determine, in response to a waiting request for a completion event initiated by the RDMA application, a user-mode memory region corresponding to the RDMA application, where the user-mode memory region is configured for writing of notification information by the RDMA device when a completion event occurs in at least one CQ queue corresponding to the RDMA application

The control module 42a is configured to control a first CPU hardware resource to monitor in a low-power state whether a write event of notification information occurs in a user-mode memory region, where the first CPU hardware resource is a CPU hardware resource allocated to an RDMA application for performing completion event notification to the RDMA application.

The reporting module 43a is configured to: when a write event occurs in the user-mode memory region, wake up the first CPU hardware resource, and control the first CPU hardware resource to report the target CQ identification information corresponding to the notification information to the RDMA application, so as to notify the RDMA application that a completion event occurs in the target CQ queue corresponding to the target CQ identification information.

In an example, the control module 42a is configured to: control the first CPU hardware resource to execute one or more user-mode control instructions, to control the first CPU hardware resource to monitor in a low-power state whether a write event of the notification information occurs in the user-mode memory region; where the one or more user-mode control instructions include the description information of the user-mode memory region, which is used by the first CPU hardware resource to determine the user-mode memory region that needs to be monitored.

In an example, the control module 42a is configured to: control the first CUP hardware resource to execute a first user-mode control instruction, where the first user-mode control instruction includes description information of a user-mode memory region, which is used by the first CPU hardware resource to determine a user-mode memory region that needs to be monitored; and control the first CPU hardware resource to execute a second user-mode control instruction, so as to control the first CPU hardware resource to enter a low-power state, and monitor in the low-power state whether a write event of notification information occurs in the user-mode memory region.

In an example, the reporting module 43a is configured to: control, according to a write position of the notification information, the first CPU hardware resource to read the target CQ identification information from the user-mode memory region or the queue buffer associated with the user-mode memory region, and report the target CQ identification information to the RDMA application.

In an example, the RDMA event management apparatus further includes: a creation module; and the creation module is configured to create at least one CQ queue and one or more user-mode memory region for the RDMA application in response to an RDMA resource initialization request initiated by the RDMA application, so that the RDMA device writes notification information when a completion event occurs in the at least one CQ queue.

In an example, the quantity of the user-mode memory region is at least one, and the at least one user-mode memory region is in one-to-one correspondence with the at least one CQ queue; accordingly, the reporting module 43a is configured to: according to the write position of the notification information, determine a target user-mode memory region to which the notification information is written in the at least one user-mode memory region; and control the first CPU hardware resource to read target CQ identification information from the target user-mode memory region, where the target CQ identification information identifies that a completion event occurs in a target CQ queue corresponding to the target user-mode memory region.

In an example, the notification information is target CQ identification information.

In an example, each user-mode memory region is further used for the RDMA device to write target CQ identification information when a completion event occurs in a corresponding CQ queue; accordingly, the notification information is different from the target CQ identification information.

In an example, the creation module is further configured to: create a queue buffer for the RDMA application, and associate the user-mode memory region with the queue buffer, where the queue buffer is used for the RDMA device to write, when a completion event occurs in at least one CQ queue, CQ identification information corresponding to the CQ queue in which the completion event occurs; and accordingly, the reporting module is configured to: control, according to the write position of the notification information, the first CPU hardware resource to read latest written CQ information from the queue buffer as the target CQ identification information.

In an example, the RDMA event management apparatus further includes a fetch module. The fetch module is configured to: before creating a queue buffer for the RDMA application, fetch a target resource creation mode selected for use by the RDMA application; a creation module, configured to: when the target resource creation mode is the first resource creation mode, create a queue buffer for the RDMA application, and associate a user-mode memory region with the queue buffer; and when the target resource creation mode is the second resource creation mode, create a one-to-one corresponding user-mode memory region for at least one CQ queue, and prohibit the operation of creating the queue buffer for the RDMA application.

In an example, the fetch module is configured to: fetch the target resource creation mode selected for use by the RDMA application from the RDMA resource initialization request; or fetch the target resource creation mode selected for use by the RDMA application from a resource creation mode selection request in response to the resource creation mode selection request initiated by the RDMA application.

In an example, notification information written by the RDMA device in the user-mode memory region each time is the same or different.

In an example, the first CPU hardware resource is a CPU hardware thread in a hyper-threading CPU, or a CPU core in a multi-core CPU.

The detailed implementations of the RDMA event management apparatus may refer to the example shown in FIG. 2A, which are not described herein again.

According to the RDMA event management apparatus provided in the examples of the present disclosure, a user-mode event management instance for event notification is added between an RDMA application and an RDMA device. Based on the user-mode event management instance, in an event notification process for the RDMA application, a CPU hardware resource used to perform event notification for the RDMA application can be enabled to wait for a completion event to occur in a low-power state, to reduce power consumption; when the completion event occurs, the RDMA device can be enabled to "wake up" the CPU hardware resource in user mode; and after the CPU hardware resource is woken up, the CPU hardware resource can directly notify the RDMA application that a completion event occurs. The entire process does not need to pass through kernel mode, and there is no need to switch context between kernel mode and user mode, thereby reducing code processing logic of kernel mode, shortening the paths and periods for completion event notification from RDMA devices to RDMA applications, reducing the network communication delays of RDMA applications, and improving RDMA application performance.

Correspondingly, examples of the present disclosure further provides a computer device, including a storage, a processor, and an RDMA device, where the storage stores program code corresponding to a user-mode event management instance and program code corresponding to an RDMA application, the user-mode event management instance is located between the RDMA application and the RDMA device, and the processor is coupled to the storage, and is configured to execute the program code corresponding to the user-mode event management instance, to implement the steps in the RDMA event management method provided in the examples of the present disclosure.

FIG. 4B is a schematic structural diagram of an RDMA device according to an example example of the present disclosure. As shown in FIG. 4B, the RDMA device includes a monitoring module 41b and a writing module 42b.

The monitoring module 41b is configured to monitor, in a data transmission process for an RDMA application, whether a completion event occurs in at least one CQ queue corresponding to the RDMA application; and the writing module 42b is configured to: write, in response to that the monitoring module detects that a completion event occurs in a target CQ queue, notification information to a user-mode memory region corresponding to the RDMA application, so that a user-mode event management instance wakes up a first CPU hardware resource and controls the first CPU hardware resource to report target CQ identification information corresponding to the notification information to the RDMA application; where the first CPU hardware resource is a CPU hardware resource allocated to the RDMA application and configured to perform completion event notification to the RDMA application, and under a control of the user-mode event management instance, monitors in a low-power state whether a write event of the notification information occurs in the user-mode memory region, until being woken up in response to detection that the write event occurs.

The implementation forms of the monitoring module and the writing module are not limited. For example, the monitoring module and the writing module may be implemented in a hardware form, e.g., an RDMA NIC, or may be implemented in a software form, e.g., a virtual NIC, which are not limited.

In an example, the RDMA device further includes: a receiving module and a determining module; the receiving module is configured to receive description information of the at least one CQ queue and description information of the user-mode memory region that are sent by the user-mode event management instance; and the determining module is configured to determine, according to the description information of the at least one CQ queue and the description information of the user-mode memory region, the at least one CQ queue and the user-mode memory region, respectively; where the at least one CQ queue and the user-mode memory region are RDMA resources that are created by the user-mode event management instance for the RDMA application and used to perform completion event notification.

The detailed implementations of the RDMA device may refer to the foregoing examples, which are not described herein again.

In the examples of the present disclosure, a user-mode event management instance for event notification is added between an RDMA application and an RDMA device. Based on the user-mode event management instance, in an event notification process for the RDMA application, a CPU hardware resource configured to perform event notification for the RDMA application can be enabled to wait for a completion event to occur in a low-power state, to reduce power consumption; when the completion event occurs, the RDMA device can be enabled to "wake up" the CPU hardware resource in user mode; and after the CPU hardware resource is woken up, the CPU hardware resource can directly notify the RDMA application that a completion event occurs. The entire process does not need to pass through kernel mode, and there is no need to switch context between kernel mode and user mode, thereby reducing code processing logic of kernel mode, shortening the paths and periods for completion event notification from RDMA devices to RDMA applications, reducing the network communication delays of RDMA applications, and improving RDMA application performance.

Accordingly, an example of the present disclosure further provides a computer-readable storage medium storing a computer program, where when the computer program is executed, the steps in the method examples shown in FIG. 3A and FIG. 3B can be implemented.

The memory in the foregoing examples may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The communications component in the foregoing example is used to facilitate wired or wireless communication between a device in which the communications component is located and another device. The device where the communication component is located may access a wireless network based on a communication standard, e.g., mobile communication networks such as WiFi, 2G, 3G, 4G/LTE, 5G, or a combination thereof. In an example example, the communication component receives a broadcast signal or broadcast associated information from an external broadcast management system via a broadcast channel. In an example, the communication component further includes a near field communication (NFC) module to facilitate short-range communications. For example, the NFC module may be implemented based on radio frequency identification (RFID) technology, infrared data association (IrDA) technology, ultra-wideband (UWB) technology, Bluetooth (BT) technology, and other technologies.

The display in the foregoing examples includes a screen, which may include a liquid crystal display (LCD) and a touch panel (TP). If the screen includes a touch panel, the screen may be implemented as a touch screen to receive input signals from a user. The touch panel includes one or more touch sensors to sense touches, swipes, and gestures on the touch panel. The touch sensor may not only sense a boundary of a touch or swipe action, but also detect a duration and a pressure related to the touch or swipe action.

The power supply component in the foregoing example provides power to various components of a device in which the power supply component is located. The power component may include a power management system, one or more power sources, and any other components associated with the generation, management, and distribution of power in a device on which the power component is located.

The audio component in the foregoing example may be used to output and/or input an audio signal. For example, the audio component includes a microphone (MIC), and when the device in which the audio component is located is in an operation mode, e.g. a call mode, a recording mode, and a voice recognition mode, the MIC is configured to receive external audio signals. The received audio signal may be further stored in the memory or transmitted via the communication component. In some examples, the audio component further includes a speaker to output audio signals.

A person skilled in the art should understand that the examples of the present disclosure may be provided as a method, a system, or a computer program product. Therefore, the present disclosure may use a form of hardware only examples, software only examples, or examples with a combination of software and hardware. Moreover, the present disclosure may use a form of a computer program product that is implemented on one or more computer-usable storage media (including but not limited to a disk memory, a CD- ROM, an optical memory, and the like) that include computer-usable program code.

The present disclosure is described with reference to the flowcharts and/or block diagrams of the method, the device (system), and the computer program product according to the examples of the present disclosure. It will be understood that each flow and/or block in the flowcharts and/or block diagrams, and combinations of flows and/or blocks in the flowcharts and/or block diagrams, can be implemented by computer program instructions. These computer program instructions may be provided to a general-purpose computer, a special-purpose computer, an embedded processor, or a processor of another programmable data processing device to generate a machine, so that the instructions executed by the computer or the processor of the another programmable data processing device generate an apparatus for implementing a function specified in one or more procedures in the flowcharts and/or one or more blocks in the block diagrams.

These computer program instructions may also be stored in a computer-readable memory that can guide a computer or another programmable data processing device to work in a specific manner, so that the instructions stored in the computer-readable memory generate a product including an instruction apparatus, and the instruction apparatus implements a function specified in one or more processes in the flowcharts and/or one or more blocks in the block diagrams.

These computer program instructions may also be loaded onto a computer or other programmable data processing device to cause a series of operational steps to be executed on the computer or other programmable device to produce computer-implemented processing, such that the instructions executed on the computer or other programmable device provide steps for implementing the functions specified in one or more flows of the flowcharts and/or one or more blocks of the block diagrams.

In a typical configuration, a computing device includes one or more processors (CPU), an input/output interface, a network interface, and a memory.

The memory may include a form of a volatile memory, a random access memory (RAM), and/or a non-volatile memory in a computer-readable medium, for example, a read-only memory (ROM) or a flash RAM. Memory is an example of computer-readable media.

Computer readable media includes both permanent and non-permanent, removable and non-removable media capable of storing information by any method or technology. The information may be computer-readable instructions, data structures, modules of a program, or other data. Examples of computer storage media include, but are not limited to, a phase change memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette tape, a magnetic tape/magnetic disk storage or another magnetic storage device, or any other non-transmission media, which may be used to store information that can be accessed by a computing device. As defined herein, the computer-readable medium does not include transitory media, such as modulated data signals and carrier waves.

It should also be noted that the terms "include", "comprise" or any other variations thereof are intended to cover non-exclusive inclusion, so that a process, method, product or device including a series of elements includes not only those elements, but also other elements not explicitly listed, or elements inherent to such a process, method, product or device. Without more limitations, the element defined by the statement "including a..." does not exclude the existence of other identical elements in the process, method, product or device including the element.

The foregoing descriptions are merely examples of the present disclosure, but are not intended to limit the present disclosure. For those skilled in the art, the present disclosure may have various modifications and variations. Any modification, equivalent replacement, or improvement made without departing from the spirit and principle of the present disclosure shall fall within the scope of the claims of the present disclosure.

## Claims

1. An RDMA event management method, applied to a user-mode event management instance located between an RDMA application and an RDMA device, comprising:
determining, in response to a waiting request for a completion event initiated by the RDMA application, a user-mode memory region corresponding to the RDMA application, wherein the user-mode memory region is configured for writing of notification information by the RDMA device when a completion event occurs in at least one CQ queue corresponding to the RDMA application;
controlling a first CPU hardware resource to monitor in a low-power state whether a write event of the notification information occurs in the user-mode memory region, wherein the first CPU hardware resource is a CPU hardware resource allocated to the RDMA application and configured to perform completion event notification to the RDMA application; and
in a case where the write event occurs in the user-mode memory region, waking up the first CPU hardware resource, and controlling the first CPU hardware resource to report target CQ identification information corresponding to the notification information to the RDMA application, to notify the RDMA application that a completion event occurs in a target CQ queue corresponding to the target CQ identification information.

2. The method according to claim 1, wherein controlling the first CPU hardware resource to monitor in the low-power state whether the write event of the notification information occurs in the user-mode memory region comprises:
controlling the first CPU hardware resource to execute one or more user-mode control instructions, to control the first CPU hardware resource to monitor in the low-power state whether the write event of the notification information occurs in the user-mode memory region;
wherein the one or more user-mode control instructions comprise description information of the user-mode memory region, so that the first CPU hardware resource determines the user-mode memory region that needs to be monitored.

3. The method according to claim 2, wherein controlling the first CPU hardware resource to execute more than one user-mode control instructions, to control the first CPU hardware resource to monitor in the low-power state whether the write event of the notification information occurs in the user-mode memory region comprises:
controlling the first CPU hardware resource to execute a first user-mode control instruction, wherein the first user-mode control instruction comprises description information of the user-mode memory region, which is used by the first CPU hardware resource to determine the user-mode memory region that needs to be monitored; and
controlling the first CPU hardware resource to execute a second user-mode control instruction, to control the first CPU hardware resource to enter the low-power state, and monitor, in the low-power state, whether the write event of the notification information occurs in the user-mode memory region.

4. The method according to claim 1, wherein controlling the first CPU hardware resource to report the target CQ identification information corresponding to the notification information to the RDMA application comprises:
controlling, according to a write position of the notification information, the first CPU hardware resource to read the target CQ identification information from the user-mode memory region or a queue buffer associated with the user-mode memory region, and report the target CQ identification information to the RDMA application.

5. The method according to claim 4, further comprising:
creating, in response to an RDMA resource initialization request initiated by the RDMA application, at least one CQ queue and one or more user-mode memory regions for the RDMA application, so that the RDMA device writes notification information when a completion event occurs in the at least one CQ queue.

6. The method according to claim 5, wherein a quantity of the user-mode memory regions is at least one, and the at least one user-mode memory region is in one-to-one correspondence with the at least one CQ queue; and
accordingly, controlling, according to the write position of the notification information, the first CPU hardware resource to read the target CQ identification information from the user-mode memory region or the queue buffer associated with the user-mode memory region comprises:
determining, according to the write position of the notification information, a target user-mode memory region in which the notification information is written among the at least one user-mode memory region; and
controlling the first CPU hardware resource to read the target CQ identification information from the target user-mode memory region, wherein the target CQ identification information identifies that a completion event occurs in a target CQ queue corresponding to the target user-mode memory region.

7. The method according to claim 5, further comprising:
creating, in response to the RDMA resource initialization request initiated by the RDMA application, a queue buffer for the RDMA application, and associating the user-mode memory region with the queue buffer, wherein the queue buffer is configured for writing of CQ identification information by the RDMA device when a completion event occurs in the at least one CQ queue, the CQ identification information corresponding to the CQ queue in which the completion event occurs;
accordingly, controlling, according to the write position of the notification information, the first CPU hardware resource to read the target CQ identification information from the user-mode memory region or the queue buffer associated with the user-mode memory region comprises:
controlling, according to the write position of the notification information, the first CPU hardware resource to read latest written CQ information from the queue buffer as the target CQ identification information.

8. The method according to claim 7, wherein before creating the queue buffer for the RDMA application, the method further comprises:
fetching a target resource creation mode selected for use by the RDMA application;
in a case where the target resource creation mode is a first resource creation mode, performing an operation of creating the queue buffer for the RDMA application, and associating the user-mode memory region with the queue buffer; and
in a case where the target resource creation mode is a second resource creation mode, creating one or more user-mode memory regions that are in one-to-one correspondence with the at least one CQ queue, and prohibiting the operation of creating the queue buffer for the RDMA application.

9. The method according to claim 8, wherein fetching the target resource creation mode selected for use by the RDMA application comprises:
fetching the target resource creation mode selected for use by the RDMA application from the RDMA resource initialization request;
or
fetching, in response to a resource creation mode selection request initiated by the RDMA application, the target resource creation mode selected for use by the RDMA application from the resource creation mode selection request.

10. An RDMA event management method, applied to an RDMA device, comprising:
monitoring, in a data transmission process for an RDMA application, whether a completion event occurs in at least one CQ queue corresponding to the RDMA application; and
writing, in response to detection that a completion event occurs in a target CQ queue, notification information to a user-mode memory region corresponding to the RDMA application, so that a user-mode event management instance wakes up a first CPU hardware resource and controls the first CPU hardware resource to report target CQ identification information corresponding to the notification information to the RDMA application;
wherein the first CPU hardware resource is a CPU hardware resource allocated to the RDMA application and configured to perform completion event notification to the RDMA application, and under a control of the user-mode event management instance, monitors in a low-power state whether a write event of the notification information occurs in the user-mode memory region, until being woken up in response to detection that the write event occurs.

11. The method according to claim 10, further comprising:
receiving description information of the at least one CQ queue and description information of the user-mode memory region that are sent by the user-mode event management instance; and
determining, according to the description information of the at least one CQ queue and the description information of the user-mode memory region, the at least one CQ queue and the user-mode memory region, respectively;
wherein the at least one CQ queue and the user-mode memory region are RDMA resources created by the user-mode event management instance for the RDMA application and required to perform completion event notification.

12. A computer device, comprising: a storage, a processor, and an RDMA device, wherein the storage stores program code corresponding to a user-mode event management instance and program code corresponding to an RDMA application, the user-mode event management instance is located between the RDMA application and the RDMA device, and the processor is coupled to the storage and configured to execute the program code corresponding to the user-mode event management instance, to implement the steps in the method according to any one of claims 1-9.

13. An RDMA device, comprising:
a monitoring module, configured to monitor, in a data transmission process for an RDMA application, whether a completion event occurs in at least one CQ queue corresponding to the RDMA application; and
a writing module, configured to: write, in response to detection that a completion event occurs in a target CQ queue, notification information to a user-mode memory region corresponding to the RDMA application, so that a user-mode event management instance wakes up a first CPU hardware resource and controls the first CPU hardware resource to report target CQ identification information corresponding to the notification information to the RDMA application;
wherein the first CPU hardware resource is a CPU hardware resource allocated to the RDMA application and configured to perform completion event notification to the RDMA application, and under a control of the user-mode event management instance, monitors in a low-power state whether a write event of the notification information occurs in the user-mode memory region, until being woken up in response to detection that the write event occurs.

14. A computer-readable storage medium storing a computer program, wherein the computer program, when executed by a processor, causes the processor to implement the steps in the method according to any one of claims 1-9 and claims 10-11.
